# EUROPEAN PATENT APPLICATION

(11) **EP 2 461 018 A1**
(43) Date of publication of application: **06.06.2012**
(21) Application number: 10803931.4
(22) Date of filing: 15.06.2010
(51) Int. Cl.: F03B 13/18

(54) **INSTALLATION FOR PRODUCING ELECTRICITY FROM SEA WAVES BY BASIC PULSING METHOD**

(30) Priority: 28.07.2009 ES 200901662
(71) Applicant: De La Cruz Blásquez, Julio, 28015 Madrid (ES)
(72) Inventor: De La Cruz Blásquez, Julio, 28015 Madrid (ES)
(74) Representative: Gonzalez Gomez, Maria Virtudes
(86) International application number: PCT/ES2010/000263
(87) International publication number: WO 2011/012740

(57) **Abstract**

The installation comprises a beam (1) structure inside which a basic float (5) can move up and down, the upper and lower limits of said movement being damped by springs (6), the beam (1) structure being associated with a series of floats (2) submerged in the sea and held at a distance from the sea bed by chains (3) attached to the corresponding anchors (4). Inside the basic float (5) are generators (7) that are rotated by the movement coming from inertial discs (8) with ratchets that impact against the teeth of racks (9), so that the up and down movements of this basic float (5), under the action of the sea waves, cause, via the inertia discs (8) and racks (9), the generators (7) to rotate so as to convert the mechanical energy into electricity.

## Description

### OBJECT OF THE INVENTION

The object of the invention is to develop and operate an installation for producing electricity using the impulse of sea waves, both in their horizontal translational movement and in the vertical movement in which the waves rise and fall.

### BACKGROUND OF THE INVENTION

The invention falls in the field of electricity production and within the special regime dedicated to production of electricity from renewable sources, promoted by Royal Decree 2818/19988 of 23 December, European Union Directive 2011/77/EC of 27 September, Royal Decree 436/2004 and Royal Decree-Law 7/2006.

As the most important antecedent may be cited the document corresponding to PCT/ES2008/00024, which also relates to an installation for producing electricity from sea waves by the basic pulse method, which installation basically comprises a system support unit, a unit for capturing the energy from the waves, and a unit for generating the electricity.

The support unit consists of a floater attached to the sea floor by cables anchored to shoes installed in the sea floor.

The unit for capturing the energy from the sea waves comprises a floater formed by two pyramid-shaped trunks joined at their greater base, which slides under the action of the waves along a column attached to the floater of the support unit, through a cardan or ball joint, and by a folding and elastic cylinder to the aforementioned floater. This unit for capturing energy from waves also comprises an articulated structure attached to the top face of the floater and another structure that supports the generators, the articulated structure comprising an elastic spring placed on a horizontal bar that acts as a guide, this spring aiding the up/down movement of the floater, such that some horizontal bars in a staircase arrangement act by impulse on the ratchets of the inertia disc.

The unit for generating electricity comprises a number of generators disposed inside the floater and attached to the column by a rectangular structure, which generators are associated to the inertia discs such that the generators receive the movement through bars that act on the ratchets of the inertia discs.

The information described in this PCT suffers from a number of drawbacks, among which the following can be cited:
- As the floater slides in its up/down movement on a central column, to which it is attached by a cardan or ball joint, the ball may break leaving the entire system adrift in high seas, in case of large wave conditions.
- When the sea is in low tide, the floater of the structure of the system is inclined 45° to 60° to the vertical, which means that the system will continue its random motion, generating minimal power, so that its performance is significantly reduced.

### DESCRIPTION OF THE INVENTION

The installation taught, based on that described in PCT/ES2008/000024, presents a number of innovations and improvements in each of the different units that make up the installation, that is, in the support unit, in the unit for capturing energy from the waves, and in the electricity generation unit.

Specifically, according to the invention in the support unit is established a structure of beams and as many submerged floaters as there are beams, attached to the former at their lower ends, such that these floaters keep the structure vertical at all times while the basic floater adapts to the height of the sea according to the tides, the system thereby capturing the maximum energy produced by the waves at each time.

In the unit for capturing energy from the waves, the basic floater adopts a cylindrical shape on the top and a hemispherical shape on the bottom, and can slide between the beams.

In addition, the inertia discs of this unit for capturing energy from the waves are provided with ratchets that engage the teeth of racks that are mounted on U-bars attached to the beams, this mechanism making the inertia discs rotate in a single sense, when the basic floater rises and falls, in turn causing the corresponding generators to rotate.

Also included are some springs that limit and dampen the maximum upward/downward path of the basic floater, accelerating the upward and downward motion when the floater collides against the springs if the waves are greater than the wave selected as a basis for calculation.

Lastly, in the unit for generating electricity the generators are mounted on a horizontal platform provided inside the basic floater, out of reach of the corrosive action of the sea.

Based on these characteristics, the floater will slide between the beams, thereby eliminating the cardan or ball joint provided in the Patent defined in the State of the Art.

In addition, it is worth noting that the use of the mechanism based on pinions that engage in the corresponding racks allows simplifying both the manufacture and the assembly and maintenance tasks.

### DESCRIPTION OF THE DRAWINGS

To complete the description made below and in order to aid a better understanding of the characteristics of the invention, according to a preferred example of embodiment, the description is accompanied by a set of drawings that form an integral part of which and where, for purposes of illustration only and in a non-limiting sense, the following is shown:

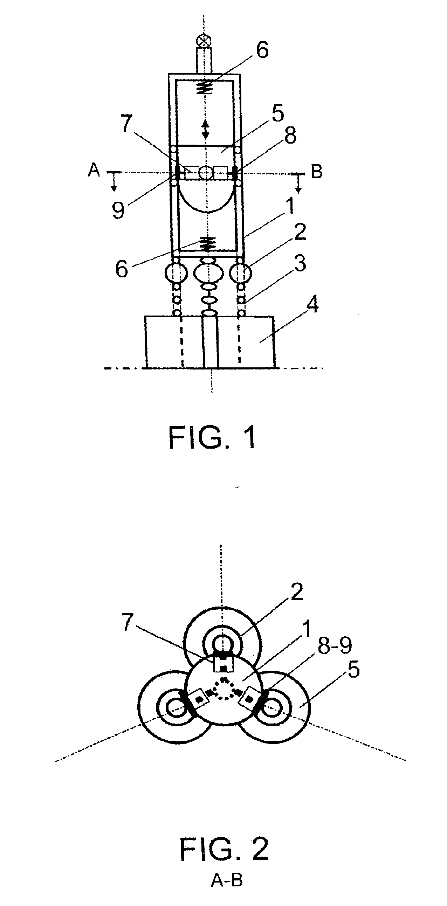

Figure 1 shows a schematic elevation view of the installation for producing electricity from sea waves, executed according to the object of the invention.
Figure 2 shows a cross-section view along the A-B line represented in the previous figure.

### PREFERRED EMBODIMENT OF THE INVENTION

As can be seen in the figures described above, the installation comprises a structure based on beams (1) and as many submerged floaters (1) with a lenticular or spherical shape, which are attached to the sea bed by chains (3) secured to corresponding anchors (4).

Inside the structure formed by the beams (1) is mounted a basic floater (5) having a hemispherical bottom part and the rest of it to its upper end being cylindrical, so that in the upward/downward movements of this basic floater (5) some dampening springs (6) have been provided against which the basic floater (5) will impact in its aforementioned upward and downward movements, causing not only a dampening of the impact but also that when it rises and meets the corresponding spring (6), the latter will make the basic floater (5) move down quickly, and conversely, when the floater (5) falls and meets the corresponding bottom spring (6), the latter will push the basic floater (5) upward.

Inside the basic floater (5), on a horizontal platform, are mounted the electricity generators (7).

In addition, the inertia discs (8) provided have been fitted with ratchets that impact against corresponding racks (9), specifically one pair of racks for each beam of the structure (1), making the inertia discs (8) rotate in alternating senses in the upward and downward movements of the basic floater (5), thereby turning the generators (7). The racks (9) are established in corresponding U-bars joined to the beams, such that the rotation of the generators (7) implies the transformation of mechanical energy into electricity.

The aforementioned components and elements can be sized in the most appropriate manner for each case, and made with suitable materials, either plastic for elements that will admit this material or steel in other cases, such as for the inertia discs (8), the racks (9) and even the basic floater (5), and of course the springs (6).

Lastly, the basic floater (5) is provided with one or more trapdoors on its upper part that provide access to its interior.

It should also be mentioned that the installation as a whole can be located anywhere in the sea, both in the high seas and in medium and low depth areas, on the coast, etc. and in all cases the electricity will be transported to land using marine cables at the voltage required in view of the distance from the installation to the coast and the characteristics of the electrical grid line provided in the area in which the installation will be connected.

## Claims

1. Installation for producing electricity from sea waves by the basic pulse method, based on using the movement of sea waves, both horizontal and vertical, in its two aspects of sea wave rising and falling motions, comprising a support unit with floaters that keep the installation submerged at a distance from the sea bed, a unit for capturing energy from the sea waves in which participate a basic floater, some inertia discs used to transmit the mechanical energy of the upward/downward movement of the basic floater to a plurality of generators disposed inside the basic floater itself, and also comprising a unit for producing electricity to act on the generators, **characterised in that** the support unit comprises a structure of beams (1) and as many submerged floaters (2), the basic floater (5) being mounted such that it moves up and down inside the structure of beams (1), this basic floater (5) having a hemispherical shape on its bottom part and the rest of it being cylindrical in shape, where in addition, the corresponding inertial discs (8) are provided with ratchets that engage the teeth of corresponding racks (9), establishing the rotation of said inertia discs (8) in a single sense only in the upward and downward motion of the basic floater (5), in order to turn the corresponding generators (7) and establish the transformation of mechanical energy into electricity.

2. Installation for producing electricity from sea waves by the basic pulse method according to claim 1, **characterised in that** in the top and bottom part of the structure formed by the beams (1) are provided corresponding groups of springs (6) which impact against and dampen the motion of the basic floater (5) in its upward and downward motion, pushing it in the opposite direction each time it impacts against one of the springs (6).

3. Installation for producing electricity from sea waves by the basic pulse method according to claim 1, **characterised in that** the racks (9), against the teeth of which impact the corresponding ratchets of the inertia discs (8), are mounted on U-bars.

4. Installation for producing electricity from sea waves by the basic pulse method according to claim 1, **characterised in that** the generators (7) are disposed on a horizontal platform disposed inside the basic floater (5) itself, out of reach of the corrosive effect of the sea.

## Amended claims

### Amended claims under Art. 19.1 PCT

**1.** Installation for producing electricity from sea waves by the basic pulse method, based on using the movement of sea waves, both horizontal and vertical, in its two aspects of sea wave rising and falling motions, comprising a support unit with floaters that keep the installation submerged at a distance from the sea bed, a unit for capturing energy from the sea waves in which participate a basic floater, some inertia discs used to transmit the mechanical energy of the upward/downward movement of the basic floater to a plurality of generators disposed inside the basic floater itself, and also comprising a unit for producing electricity to act on the generators, **characterised in that** the support unit comprises a structure of beams (1) and as many submerged floaters (2), the basic floater (5) being mounted such that it moves up and down inside the structure of beams (1), this basic floater (5) having a hemispherical shape on its bottom part and the rest of it being cylindrical in shape, where in addition, the corresponding inertial discs (8) are provided with ratchets that engage the teeth of corresponding racks (9), establishing the rotation of said inertia discs (8) in a single sense only in the upward and downward motion of the basic floater (5), in order to turn the corresponding generators (7) and establish the transformation of mechanical energy into electricity, wherein in addition on the upper and lower parts of the structure formed by the beams (1) are provided corresponding groups of springs (6) which are impacted on and dampen the floater (5) in its upward and downward motion, pushing it in the opposite direction each time it impacts against one of the springs (6).
**2.** Installation for producing electricity from sea waves by the basic pulse method according to claim 1, **characterised in that** the racks (9), against the teeth of which impact the corresponding ratchets of the inertia discs (8), are mounted on U-bars.
**3.** Installation for producing electricity from sea waves by the basic pulse method according to claim 1, **characterised in that** the generators (7) are disposed on a horizontal platform disposed inside the basic floater (5) itself, out of reach of the corrosive effect of the sea.
